# EUROPÄISCHE PATENTANMELDUNG

(11) **EP 4 794 176 A1**
(43) Veröffentlichungstag der Anmeldung: **19.08.2026**
(21) Anmeldenummer: 25157984.3
(22) Anmeldetag: 14.02.2025
(51) Int. Cl.: H02K 5/132, H02K 7/00, H02K 19/10, H02K 11/33, F04D 13/08

(54) **ELEKTRISCHES ANTRIEBSSYSTEM FÜR EINE TAUCHKREISELPUMPE**

(71) Anmelder: Oil Dynamics GmbH, 69115 Heidelberg (DE)
(72) Erfinder: Hackl, Christoph, 82377 Penzberg (DE)
(74) Vertreter: Altmann Stößel Dick Patentanwälte PartG mbB

(57) **Zusammenfassung**

Es wird ein elektrisches Antriebssystem (116) zum Antreiben mindestens einer Tauchkreiselpumpe (114) vorgeschlagen. Das elektrische Antriebssystem (116) umfasst mindestens einen Reluktanz-Synchronmotor (117) oder mindestens einen Hybrid-Reluktanz-Synchronmotor (118), wobei mindestens einer der Motoren (117, 118) eine Rotorwelle (128), ein Lamellen (138) aufweisendes Rotorsegment (126) und einen Stator (134) umfasst, wobei das Verhältnis einer Länge (130) der Rotorwelle (128) zu einem Außendurchmesser (132) des Stators (134) ≥ 2 ist.

Weiterhin werden ein Tauchkreiselpumpensystem 110 zur Fluidförderung und eine Verwendung mindestens eines Reluktanz-Synchronmotors (126) oder eines Hybrid-Reluktanz-Synchronmotors in einem Tauchkreiselpumpensystem (110) zur Fluidförderung vorgeschlagen.

## Beschreibung

### Technisches Gebiet

Die Erfindung betrifft ein elektrisches Antriebssystem zum Antreiben mindestens einer Tauchkreiselpumpe zur Fluidförderung, insbesondere in der Geothermie, der Ölindustrie und/oder der Wasserindustrie. Weiterhin betrifft die Erfindung ein Tauchkreiselpumpensystem und eine Verwendung mindestens eines Reluktanz-Synchronmotors oder Hybrid-Reluktanz-Synchronmotor in einem Tauchkreiselpumpensystem. Systeme und Verwendungen der genannten Art können auf dem allgemeinen Gebiet der Gewinnung von Erdfluiden eingesetzt werden. Insbesondere kann die Erfindung im Bereich der Geothermie, also zum Beispiel zur Gewinnung von thermischer Energie aus dem Erdinneren. So kann die Erfindung beispielsweise in Geothermie-Anlagen zum Einsatz kommen in denen eine oder mehrere Tiefbrunnen-Pumpensysteme verwendet werden. Auch ein Einsatz der Erfindung in der Ölindustrie, beispielsweise zur Förderung von Öl oder ölähnlichen Flüssigkeiten, und/oder ein Einsatz in der Wasserindustrie, beispielsweise zur Förderung von Wasser, insbesondere von Trinkwasser, ist möglich. Auch andere Einsatzgebiete sind jedoch grundsätzlich denkbar.

### Technischer Hintergrund

In der Geothermie wirkt, im Vergleich zur herkömmlichen Erdölförderung, eine andere Hydrodynamik innerhalb der Bohrlöcher, weshalb Tiefbrunnen-Pumpensysteme üblicherweise näher an der Erdoberfläche positioniert werden als Pumpensysteme, die üblicherweise in der herkömmlichen Erdölförderung zum Einsatz kommen. Aus dieser Positionierung ergeben sich jedoch auch Nachteile wie Druckschwankungen von typischerweise über 50 bar und Temperaturschwankungen von über 150°K, denen das Tiefbrunnen-Pumpensystem ausgesetzt ist. In herkömmlichen Tiefbrunnen-Pumpensysteme kommen zum Antreiben der Förderpumpen üblicherweise Induktionsmaschinen (IM) und/oder Permanentmagnet-Synchronmaschinen (PMSM) zum Einsatz.

Trotz der mit den beschriebenen Systemen erzielten Vorteile bestehen nach wie vor zahlreiche technische Herausforderung. So können in der Geothermie, aufgrund der im Vergleich zur herkömmlichen Erdölförderung von ihrem Durchmesser her größeren Bohrlöcher typischerweise auch größere Mengen Fluid gefördert werden. Insbesondere die an die erhöhte Fördermenge angepassten Pumpensysteme müssen jedoch häufiger als bei der Verwendung von herkömmlichen Pumpen ausgetauscht werden, nicht zuletzt aufgrund der begrenzten Antriebsleistung von herkömmlich verwendeten elektrischen Antriebssystemen. Diese unterliegen aufgrund der hohen Druck- und Temperaturschwankungen häufig einem hohen Verschleiß, der sich typischerweise in einem rasanten Verlust der Leistungsfähigkeit darstellt. Insbesondere verlieren die üblicherweise eingesetzten Magnete unter hohen Temperaturen ihre magnetische Kraft, was typischerweise zu einer signifikanten Reduktion der Maschinenleistung oder sogar Maschinenausfall führen kann. Zudem erschwert die in Tiefbrunnen-Pumpensystemen generell erforderliche Maschinenausführung mit im Vergleich zu der Länge kleinem Durchmesser eine Kühlung der Maschinenkomponenten, was ebenfalls üblicherweise eine verkürzte Lebensdauer der Antriebssysteme nach sich zieht.

### Aufgabe der Erfindung

Es wäre daher wünschenswert, ein Antriebssystem, ein Tauchkreiselpumpensystem sowie eine Verwendung bereitzustellen, welche die Nachteile bekannter Maschinen und Systeme der oben beschriebenen Art zumindest weitgehend vermeiden. Insbesondere sollen die Maschinen und Systeme zur Fluidförderung in der Geothermie geeignet sein. Die Motoren und Systeme sollen einerseits eine im Vergleich zu bekannten Antriebssysteme erhöhte Lebensdauer und gleichzeitig eine Steigerung des Wirkungsgrads gewährleisten.

### Allgemeine Beschreibung der Erfindung

Diese Aufgabe wird adressiert durch ein elektrisches Antriebssystem für mindestens eine Tauchkreiselpumpe zur Fluidförderung, durch ein Tauchkreiselpumpensystem zur Fluidförderung sowie durch eine Verwendung mindestens eines Reluktanz-Synchronmotors oder mindestens eines Hybrid-Reluktanz-Synchronmotors in einem Tauchkreiselpumpensystem zur Fluidförderung mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein elektrisches Antriebssystem zum Antreiben mindestens einer Tauchkreiselpumpe zur Fluidförderung vorgeschlagen. Beispielsweise ist das elektrische Antriebssystem eingerichtet zum Antreiben mindestens einer elektrischen Tauchkreiselpumpe. Insbesondere ist das elektrische Antriebssystem eingerichtet zur Fluidförderung in der Geothermie. Alternativ oder zusätzlich kann das elektrische Antriebssystem auch zur Fluidförderung in der Ölindustrie und/oder der Wasserindustrie eingerichtet sein. Das elektrische Antriebssystem umfasst mindestens einen Reluktanz-Synchronmotor oder mindestens einen Hybrid-Reluktanz-Synchronmotor. Dabei umfasst mindestens einer der Motoren, insbesondere mindestens einer des mindestens einen Reluktanz-Synchronmotors und des mindestens einen Hybrid-Reluktanz-Synchronmotors, eine Rotorwelle, ein Lamellen aufweisendes Rotorsegment und einen Stator. Das Verhältnis einer Länge der Rotorwelle zu einem Außendurchmesser des Stators ist dabei ≥ 2.

Der Begriff "Antriebssystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Menge von interagierenden oder voneinander abhängigen Komponenten beziehen, die ein Ganzes bilden und eingerichtet sind, um die Tauchkreiselpumpe anzutreiben, insbesondere zumindest teilweise in Bewegung zu versetzen. Beispielsweise kann das Antriebssystem eingerichtet sein, um die Bewegung der Tauchkreiselpumpe zu starten, fortzuführen und/oder beizubehalten. Insbesondere können die Komponenten des Antriebssystems miteinander interagieren, um mindestens eine gemeinsame Funktion, beispielsweise das Antreiben der Tauchkreiselpumpe zur Förderung von Fluid, insbesondere Erdfluid, zu erfüllen. Die Komponenten des Antriebssystems können unabhängig voneinander gehandhabt werden oder miteinander gekoppelt oder verbindbar sein.

Der Begriff "elektrisch", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Form der Energiequelle beziehen, welche mittels Elektrizität übertragen wird.

So kann der Begriff "elektrisches Antriebssystem" sich insbesondere auf ein Antriebssystem beziehen das eingerichtet ist die Tauchkreiselpumpe mittels Elektrizität anzutreiben, also zumindest teilweise in Bewegung zu versetzen.

Insbesondere kann das elektrische Antriebssystem zum Antreiben einer Tauchkreiselpumpe zur Förderung von mindestens 4°C, insbesondere mindestens 20°C, beispielsweise mindestens 80°C, warmem Fluid aus der Erdkruste eingerichtet sein. Beispielsweise kann das elektrische Antriebssystem also eingerichtet sein, um zur Fluidförderung zumindest teilweise in das mindestens 4°C, insbesondere mindestens 20°C, beispielsweise mindestens 80°C, warme Fluid eingetaucht zu sein. So kann beispielsweise ein den mindestens einen Reluktanz-Synchronmotor oder den mindestens einen Hybrid-Reluktanz-Synchronmotor umfassender Teil des elektrischen Antriebssystems eingerichtet sein, um in das Fluid eingetaucht und/oder untergetaucht zu sein.

Der Begriff "tauch", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Zustand und/oder eine Eignung einer Vorrichtung und/oder eines Elements zum Betrieb unter Wasser und/oder ganz oder teilweise umgeben von Fluid beziehen. Dabei muss jedoch der Einsatzbereich nicht auf Wasser beschränkt sein, sondern kann insbesondere auch andere Flüssigkeiten umfassen, beispielsweise mindestens ein beliebiges Fluid welches eine Viskosität im Bereich von 1 10⁻⁴ Pa s bis 0,1 Pa s aufweist.

Insbesondere kann der Reluktanz-Synchronmotor und/oder der Hybrid-Reluktanz-Synchronmotor beispielsweise in einem Fluid angeordnet sein, also von Fluid ganz oder teilweise umgeben sein, während er elektrisch betrieben wird, also während er zum Antreiben von mindestens einem Element, beispielsweise der Tauchkreiselpumpe, dient. Insbesondere die Hauptkomponenten des Reluktanz-Synchronmotors und/oder des Hybrid-Reluktanz-Synchronmotors, wie zum Beispiel Rotorwelle, Rotorsegment und Stator, können daher eingerichtet sein, um betrieben zu werden während diese vollständig eingetaucht sind in ein Fluid, beispielsweise in eine Wasser aufweisende Flüssigkeit. Insbesondere kann das Fluid beispielsweise eine fließendes Medium sein, beispielsweise Wasser, Öl, insbesondere Erdöl, oder eine ähnliche Flüssigkeit. So kann das Fluid beispielsweise eine Erdflüssigkeit, also eine in der Erde natürlich vorkommende Flüssigkeit, sein. Insbesondere kann der Reluktanz-Synchronmotor und/oder der Hybrid-Reluktanz-Synchronmotor eingerichtet sein, um eine Tauchkreiselpumpe anzutreiben, um ein Fluid, beispielsweise als Energie-Trägermedium, insbesondere in der Geothermie, von einem Ort unterhalb der Erdoberfläche, beispielsweise im Erdinneren, an die Erdoberfläche zu fördern und/oder zu pumpen.

Der Begriff "Tauchkreiselpumpe", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Kreiselpumpe beziehen, welche eingerichtet ist, um in Fluid eingetaucht und/oder untergetaucht, beispielsweise unter Wasser, betrieben zu werden.

Das elektrische Antriebssystem kann insbesondere eingerichtet sein, um im Bereich der Geothermie mindestens eine Tauchkreiselpumpe anzutreiben, um Fluid zu fördern. Der Begriff "Geothermie", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Form der Energiegewinnung aus der Erdwärme beziehen. Bei der durch Geothermie gewonnenen Energie kann es sich insbesondere um thermische Energie aus dem Erdinneren, zum Beispiel aus der Erdkruste, handeln. Zur Energiegewinnung kann bei der Geothermie zum Beispiel Wasser als Trägermedium verwendet werden, aber auch andere Fluide, insbesondere Flüssigkeiten, wie zum Beispiel Erdöl, aber auch Schlamm, sind als Energie-Trägermedium möglich.

Alternativ oder zusätzlich, kann das elektrische Antriebssystem auch eingerichtet sein zum Antreiben mindestens einer Tauchkreiselpumpe, um Erdöl zu fördern, beispielsweise in der Ölindustrie. Der Begriff "in der Ölindustrie", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Anwendung und/oder Verwendung zur Förderung von Erdöl oder erdölhaltigem Fluid von unterhalb der Erdoberfläche, beispielsweise aus der Erdkruste. So kann das elektrische Antriebssystem insbesondere für die Förderung von Erdöl oder erdölhaltigen Fluiden eingerichtet sein, beispielsweise durch Bohrlöcher welche einen größeren Durchmesser aufweisen im Vergleich zu Bohrlöchern wie sie in der herkömmlichen, bisherigen Erdölförderung verwendet werden.

Weiterhin alternativ oder zusätzlich, kann das elektrische Antriebssystem auch eingerichtet sein zum Antreiben mindestens einer Tauchkreiselpumpe, um Wasser, beispielsweise Trinkwasser, zu fördern, zum Beispiel in der Wasserindustrie. Der Begriff "in der Wasserindustrie", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Anwendung und/oder Verwendung zur Förderung von Wasser, beispielsweise Trinkwasser, von unterhalb der Erdoberfläche, beispielsweise aus der Erdkruste. So kann das elektrische Antriebssystem insbesondere für die Förderung von Wasser eingerichtet sein, beispielsweise durch Bohrlöcher welche einen größeren Durchmesser aufweisen im Vergleich zu Bohrlöchern wie sie in der herkömmlichen, bisherigen Wasserförderung verwendet werden.

Der Begriff "Reluktanz-Synchronmotor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine elektrische Maschine, beispielsweise einen Elektromotor, beziehen, bei welchem das Drehmoment, beispielsweise das Drehmoment der Rotorwelle, ausschließlich durch die Reluktanzkraft erzeugt wird. Der "Reluktanz-Synchronmotor" kann auch als "Synchron-Reluktanzmaschine" bezeichnet werden, sodass diese Begriffe synonym verwendbar sind. Insbesondere kann der mindestens eine Stator des Reluktanz-Synchronmotors beispielsweise mehrfach bewickelt sein, also eine mindestens zweifache Umwicklung mittels mindestens einem durch elektrischen Strom beaufschlagbaren und/oder baufschlagten elektrischen Leiter aufweisen. Der mindestens eine Stator kann beispielsweise auch als "Ständer" bezeichnet sein. Das Rotorsegment, beispielsweise angeordnet auf und/oder entlang der Rotorwelle, des Reluktanz-Synchronmotors kann beispielsweise ein hochpermeables, weichmagnetisches Material, beispielsweise Elektroblech, umfassen, insbesondere daraus bestehen. So kann das Rotorsegment insbesondere eine Mehrzahl, beispielsweise einen Stapel, von Lamellen aus Elektroblech aufweisen, insbesondere aus diesen bestehen. Die "Lamellen" des Rotorsegments können auch als "Rotorlamellen" bezeichnet werden, sodass diese Begriffe synonym verwendbar sind. Beispielsweise kann der Reluktanz-Synchronmotors eine Mehrzahl von entlang der Rotationsachse der Rotorwelle parallel angeordneten Rotorlamellen aus Elektroblech aufweisen, also zum Beispiel transversal laminiert sein. Alternativ oder zusätzlich, kann der Reluktanz-Synchronmotors eine Mehrzahl von parallel zu der Rotationsachse der Rotorwelle angeordneten Rotorlamellen aus Elektroblech aufweisen, also zum Beispiel axial laminiert sein.

Der Begriff "Hybrid-Reluktanz-Synchronmotor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine elektrische Maschine, beispielsweise einen Elektromotor, beziehen, bei welchem das Drehmoment, beispielsweise das Drehmoment der Rotorwelle, entweder ausschließlich durch die Reluktanzkraft oder aus einer Kombination von Magnetkraft, insbesondere erzeugt durch mindestens einen Permanentmagneten, und Reluktanzkraft erzeugt wird. Der "Hybrid-Reluktanz-Synchronmotor" kann auch als "Hybrid-Synchron-Reluktanzmaschine" bezeichnet werden, sodass diese Begriffe synonym verwendbar sind. Insbesondere kann der mindestens eine Stator des Hybrid-Reluktanz-Synchronmotors beispielsweise mehrfach bewickelt sein, also eine mindestens zweifache Umwicklung mittels mindestens einem durch elektrischen Strom beaufschlagbaren und/oder baufschlagten elektrischen Leiter aufweisen. Der mindestens eine Stator kann beispielsweise auch als "Ständer" bezeichnet sein. Das Rotorsegment, beispielsweise angeordnet auf und/oder entlang der Rotorwelle, des Hybrid-Reluktanz-Synchronmotors kann beispielsweise mindestens einen Magneten, insbesondere Permanentmagneten, sowie ein hochpermeables, weichmagnetisches Material, beispielsweise Elektroblech, umfassen. So kann das Rotorsegment, beispielsweise zusätzlich zu dem mindestens einen Permanentmagneten, insbesondere eine Mehrzahl, beispielsweise einen Stapel, von Lamellen aus Elektroblech aufweisen. Beispielsweise kann der Hybrid-Reluktanz-Synchronmotor, ähnlich wie der Reluktanz-Synchronmotor, transversal oder axial laminiert sein.

Der Reluktanz-Synchronmotor und/oder der Hybrid-Reluktanz-Synchronmotor kann je eine Mindestanzahl von 50 Rotorlamellen aufweisen. Beispielsweise kann der Reluktanz-Synchronmotor und/oder der Hybrid-Reluktanz-Synchronmotor eine Anzahl von Rotorlamellen in dem Bereich von 50 bis 200000 aufweisen, welche in einem Stapel, auch als Rotorpaket bezeichnet, angeordnet sein können. Zudem kann Rotorwelle mit dem Lamellen aufweisenden Rotorsegment des Reluktanz-Synchronmotors und/oder des Hybrid-Reluktanz-Synchronmotors beispielsweise ausgeprägte Pole aufweisen. Das Lamellen aufweisende Rotorsegment kann, wie oben ausgeführt, auf der Rotorwelle angeordnet sein. Eine Länge und/oder Ausdehnung des Rotorsegments parallel zur Rotorwelle ist daher stets ≤, also kleiner-gleich, das heißt kürzer oder gleich lang, wie die Länge der Rotorwelle. Die mindestens eine Rotorwelle mit dem Lamellen aufweisenden Rotorsegment können insbesondere auch als "Läufer" bezeichnet werden. Insbesondere können eine Anzahl der Pole des Stators und eine Anzahl der Pole der Rotorwelle, insbesondere der Rotorwelle mit Rotorsegment, gleich sein. Beispielsweise können der Reluktanz-Synchronmotor und/oder der Hybrid-Reluktanz-Synchronmotor je eine ausgeglichene, insbesondere gleiche, Mindestanzahl von Polpaaren von eins aufweisen. So können der Reluktanz-Synchronmotor und/oder der Hybrid-Reluktanz-Synchronmotor je insbesondere mindestens zwei Poolpaare aufweisen. Beispielsweise können der Reluktanz-Synchronmotor und/oder der Hybrid-Reluktanz-Synchronmotor je eine Anzahl von Polpaaren in dem Bereich von 1 bis 8 aufweisen.

Der Begriff "Außendurchmesser", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen maximalen Abstand und/oder eine maximale Distanz, beispielsweise einer Ausdehnung, eines Elements und/oder Objekts beziehen in einer Richtung orthogonal zu einer Rotationsachse, beispielsweise eine Symmetrieachse. So kann der Außendurchmesser der Rotorwelle beispielweise einer maximalen Ausdehnung der Rotorwelle in einer Richtung orthogonal zu der Rotationsachse der Rotorwelle entsprechen. In ähnlicher Weise kann der Außendurchmesser des Stators einer maximalen Ausdehnung des Stators entsprechen in einer Richtung orthogonal zu der Rotationsachse der Rotorwelle welche relativ zu dem Stator rotiert. Beispielsweise kann der Außendurchmesser ein Lichtmaß und/oder lichtes Maß sein. So kann es sich insbesondere bei dem Außendurchmesser der Rotorwelle um ein Längenmaß, also um eine Distanz und oder einen Abstand, handeln, welches einem Minimaldurchmesser eines Rohrs, insbesondere eines zylindrischen Rohrs, entspricht durch den die Rotorwelle, zumindest theoretisch, durchschiebbar ist. In ähnlicher Weise, kann es sich bei dem Außendurchmesser des Stators um ein Längenmaß, also um eine Distanz und oder einen Abstand, handeln, welches einem Minimaldurchmesser eines Rohrs, insbesondere eines zylindrischen Rohrs, entspricht durch den der Stator, zumindest theoretisch, durchschiebbar ist.

Die Länge der Rotorwelle, also beispielsweise eine Ausdehnung der Rotorwelle entlang und/oder parallel zu der Rotationsachse, kann beispielsweise 70 cm oder mehr betragen. Insbesondere kann die Länge der Rotorwelle in dem Bereich liegen von 70 cm bis 5000 cm. Insbesondere kann die Rotorwelle eine Länge in dem Bereich von 70 cm bis 2000 cm aufweisen. Beispielsweise kann die Rotorwelle eine Länge aufweisen in dem Bereich von 70 cm bis 1200 cm. Zum Beispiel kann die Rotorwelle eine Länge in dem Bereich von 70 cm bis 1000 cm aufweisen. Insbesondere kann die Rotorwelle eine Länge in dem Bereich von 70 cm bis 960 cm aufweisen.

Der Außendurchmesser des Stators, beispielsweise das Lichtmaß und/oder das lichte Maß des Stators, kann beispielsweise 0,5 cm oder mehr betragen. Insbesondere kann der Außendurchmesser des Stators in dem Bereich sein von 0,5 cm bis 30,00 cm. Insbesondere kann der Außendurchmesser des Stators in dem Bereich sein von 0,5 cm bis 25,00 cm. Beispielsweise kann der Außendurchmesser des Stators in dem Bereich sein von 5,00 cm bis 22,00 cm. Zum Beispiel kann der Außendurchmesser des Stators in dem Bereich sein von 10,00 cm bis 20,00 cm. Insbesondere kann der Außendurchmesser des Stators in dem Bereich sein von 10,16 cm bis 18,75 cm. Insbesondere kann der Stator des Reluktanz-Synchronmotors und/oder des Hybrid-Reluktanz-Synchronmotors auch die Funktion eines Gehäuses der Maschine, insbesondere des Motors, übernehmen, sodass der Außendurchmesser des Stators beispielsweise auch dem Außendurchmesser des Reluktanz-Synchronmotors und/oder des Hybrid-Reluktanz-Synchronmotors entsprechen kann.

Der Reluktanz-Synchronmotor kann frei sein von Magneteisenstein, beispielsweise von Magnetit, also zum Beispiel Eisen(II,III)-oxid. Insbesondere kann der hierin vorgeschlagene Reluktanz-Synchronmotor ohne seltene Erden und/oder ohne hart magnetische Materialien herstellbar sein. So kann der Reluktanz-Synchronmotor insbesondere frei sein von seltenen Erden und auch von hart magnetischen Materialien.

Der Reluktanz-Synchronmotor und/oder der Hybrid-Reluktanz-Synchronmotor können eingerichtet sein, um in das von der Tauchkreiselpumpe geförderte Fluid eingetaucht zu werden. Dabei kann das Fluid eine Mindesttemperatur vor 4 °C aufweisen. Beispielsweise kann das Fluid eine Mindesttemperatur von 20 °C aufweisen. Insbesondere kann das Fluid eine Mindesttemperatur von 80 °C aufweist. Insbesondere kann das Fluid das von der Tauchkreiselpumpe gefördert wird und in das der Reluktanz-Synchronmotor und/oder der Hybrid-Reluktanz-Synchronmotor eingetaucht werden kann eine Temperatur aufweisen in dem Bereich von 4 bis 300 °C. Beispielsweise kann das Fluid eine Temperatur aufweisen in dem Bereich von 20 bis 300 °C. Zum Beispiel kann das Fluid eine Temperatur aufweisen in dem Bereich von 80 bis 300 °C. Insbesondere kann das Fluid eine Temperatur aufweisen in dem Bereich von 100 bis 300 °C. Beispielsweise kann das Fluid eine Temperatur aufweisen in dem Bereich von 140 bis 200 °C. Zum Beispiel kann das Fluid eine Temperatur aufweisen in dem Bereich von 160 bis 180 °C.

Der Reluktanz-Synchronmotor und/oder der Hybrid-Reluktanz-Synchronmotor kann mindestens eine Motorflüssigkeit aufweisen die im Betrieb eine Temperatur, insbesondere eine Betriebstemperatur, aufweist die sich um maximal 50 °C von der Temperatur des durch die Tauchkreiselpumpe förderbaren und/oder geförderten Fluids unterscheidet.

Zum Beispiel kann mindestens eine Motorflüssigkeit des Reluktanz-Synchronmotors und/oder des Hybrid-Reluktanz-Synchronmotors im Betrieb eine Temperatur aufweisen in dem Bereich von 40 bis 400 °C. Insbesondere kann die Betriebstemperatur der Motorflüssigkeit des Reluktanz-Synchronmotors und/oder des Hybrid-Reluktanz-Synchronmotors in dem Bereich liegen von 40 bis 350 °C. Zum Beispiel kann die Betriebstemperatur der Motorflüssigkeit des Reluktanz-Synchronmotors und/oder des Hybrid-Reluktanz-Synchronmotors in dem Bereich liegen von 80 bis 300 °C. Beispielsweise kann die Betriebstemperatur der Motorflüssigkeit des Reluktanz-Synchronmotors und/oder des Hybrid-Reluktanz-Synchronmotors in dem Bereich liegen von 100 bis 300 °C. Insbesondere kann die Betriebstemperatur der Motorflüssigkeit des Reluktanz-Synchronmotors und/oder des Hybrid-Reluktanz-Synchronmotors in dem Bereich liegen von 150 bis 300 °C. Zum Beispiel kann die Betriebstemperatur der Motorflüssigkeit des Reluktanz-Synchronmotors und/oder des Hybrid-Reluktanz-Synchronmotors in dem Bereich liegen von 210 bis 230 °C.

Der Begriff "Motorflüssigkeit", wie er hier verwendet wird ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein in zumindest einem Teil des Motors, insbesondere eines Elektromotors, zum Beispiel des Reluktanz-Synchronmotors und/oder des Hybrid-Reluktanz-Synchronmotors, angeordnetes Medium beziehen welches eingerichtet ist zur Schmierung, zum Kühlen, zum elektrisch Isolieren und/oder zum Druckausgleich innerhalb des Motors. So kann die Motorflüssigkeit beispielsweise ein Medium, insbesondere eine Flüssigkeit, sein ausgewählt aus der Gruppe bestehend aus: Öl, insbesondere Schmieröl, destilliertem Wasser, Sperrflüssigkeit und Dichtmittel.

Das elektrische Antriebssystem kann mindestens einen weiteren Reluktanz-Synchronmotor und/oder mindestens einen weiteren Hybrid-Reluktanz-Synchronmotor aufweisen. So kann das elektrische Antriebssystem beispielsweise mehrere, insbesondere mindestens zwei, Reluktanz-Synchronmotoren oder Hybrid-Reluktanz-Synchronmotoren aufweisen. Dabei können die mehreren Motoren insbesondere in Reihe geschaltet sein. Das elektrische Antriebssystem kann also mindestens einen weiteren Reluktanz-Synchronmotor und/oder Hybrid-Reluktanz-Synchronmotor aufweisen, welcher mit dem ersten Reluktanz-Synchronmotor oder Hybrid-Reluktanz-Synchronmotor in Reihe geschaltet ist.

Der Begriff "in Reihe geschaltet", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine serielle Anordnung von Motoren beziehen. Zum Beispiel können in Reihe geschaltete Motoren eine serielle Anordnung von mindestens zwei, insbesondere mehreren, Lamellen aufweisenden Rotorsegmenten hintereinander entlang der Rotationsachse der Rotorwelle aufweisen. Insbesondere können die mindestens zwei in Reihe geschalteten Reluktanz-Synchronmotoren und/oder Hybrid-Reluktanz-Synchronmotoren beispielweise eine gemeinsame Rotorwelle aufweisen, wobei mindestens zwei Rotorsegmente, insbesondere die Lamellen aufweisenden Rotorsegmente, hintereinander auf der gemeinsamen Rotorwelle angeordnet sein können.

So kann das mindestens zwei in Reihe geschaltete Reluktanz-Synchronmotoren und/oder Hybrid-Reluktanz-Synchronmotoren aufweisende elektrische Antriebssystem, beispielsweise insgesamt mindestens 100 Rotorlamellen aufweisen. Zum Beispiel kann das elektrische Antriebssystem, beispielsweise das mindestens zwei in Reihe geschaltete Reluktanz-Synchronmotoren und/oder Hybrid-Reluktanz-Synchronmotoren aufweisende Antriebssystem, eine Gesamtanzahl von Rotorlamellen aufweisen in dem Bereich von 5000 bis 600000.

Beispielsweise kann ein eine Gesamtlänge der in Reihe geschalteten Reluktanz-Synchronmotoren und/oder Hybrid-Reluktanz-Synchronmotoren mindestens 10 m betragen. Insbesondere kann ein eine Gesamtlänge der in Reihe geschalteten Reluktanz-Synchronmotoren und/oder Hybrid-Reluktanz-Synchronmotoren bis zu 50 m betragen. Zum Beispiel kann eine Länge der mindestens zwei in Reihe geschalteten Reluktanz-Synchronmotoren und/oder Hybrid-Reluktanz-Synchronmotoren parallel zu der Rotationsachse, insbesondere zu der allen Motoren gemeinsamen Rotationswelle, in dem Bereich liegen von 10 m bis 50 m, beispielsweise von 20 m bis 30 m.

Das elektrische Antriebssystem kann weiterhin mindestens eine Komponente umfassen ausgewählt aus der Gruppe bestehend aus: Gleichrichter, beispielsweise als Teil eines Frequenzumrichters; DC-Link, beispielsweise als, ggf. weiterer, Teil des Frequenzumrichters; Wechselrichter, beispielsweise als, ggf. weiterer, Teil des Frequenzumrichters; Transformator; Sinusfilter; Steuerung und/oder Regelung, Stromversorgungskabel; Dämpferwicklung. So kann das elektrische Antriebssystem beispielsweise eines oder mehreres umfassen von einer Steuerung, umfassend einen oder mehrere von Frequenzumrichter, einem Sinusfilter und Transformator; und einem Stromversorgungskabel, beispielsweise Stromversorgungskabel zum elektrischen Verbinden von Transformator und Reluktanz-Synchronmotor und/oder Hybrid-Reluktanz-Synchronmotor. Beispielsweise kann das Antriebssystem einen oder mehrere von Frequenzumrichter, Sinusfilter und Transformator umfassen. Alternativ oder zusätzlich kann das Antriebssystem, zusätzlich zu dem Transformator und einem oder beiden von Frequenzumrichter und Sinusfilter, auch das Stromversorgungskabel zum elektrischen Verbinden von Transformator und Motor umfassen. Insbesondere kann das elektrische Antriebssystem mehrere der genannten Komponenten, beispielsweise alle der genannten Komponenten aufweisen. So kann das elektrische Antriebssystem zum Beispiel neben der Steuerung und/oder Regelung sowie dem Stromversorgungskabel zumindest einen Gleichrichter, einen DC-Link, einen Wechselrichter, einen Transformator und einen Sinusfilter aufweisen.

Der Begriff "Gleichrichter", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Spannungsrichter beziehen, der eingerichtet ist, um aus einer speisenden Wechselspannung eine Gleichspannung zu erzeugen.

Der Begriff "DC-Link", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Verbindung, insbesondere eine elektrische Verbindung, zwischen einem Gleichrichter und einem Wechselrichter beziehen.

Der Begriff "Wechselrichter", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Spannungsrichter beziehen, der eingerichtet ist, um aus einer speisenden Gleichspannung eine Wechselspannung zu erzeugen.

Gleichrichter, DC-Link und Wechselrichter können zum Beispiel Teile eines Frequenzumrichters sein. Der Begriff "Frequenzumrichter", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen ein Stromrichter beziehen, der eingerichtet ist, um aus einer speisenden Wechselspannung, auch als Eingangs-Wechselspannung bezeichnet, eine andere Wechselspannung, auch als Ausgangs-Wechselspannung bezeichnet, zu erzeugen. Beispielsweise kann der Frequenzumrichter zumindest eines, bevorzugt beides, aus Amplitude und Frequenz der Ausgangs-Wechselspannung gegenüber der Eingangs-Wechselspannung verändern, insbesondere um die Ausgangs-Wechselspannung an eine vordefinierte Leistung des Elektrotauchmotors, insbesondere des mindestens einen Reluktanz-Synchronmotors, anzupassen.

Der Begriff "Transformator", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine elektrische Maschine beziehen, die eingerichtet ist, um aus einer speisenden Wechselspannung eine in ihrer Frequenz davon verschiedene Wechselspannung zu erzeugen. Beispielsweise kann ein Transformator daher eingerichtet sein, um die Frequenz einer Eingangs-Wechselspannung zu verändern und so eine in ihrer Frequenz von der speisenden Wechselspannung verschiedene Ausgangs-Wechselspannung zu erzeugen. Zum Beispiel kann der Transformator die Frequenz der Ausgangs-Wechselspannung gegenüber der Eingangs-Wechselspannung verändern, insbesondere um die Frequenz der Ausgangs-Wechselspannung an eine vordefinierte Frequenz des Elektrotauchmotors, insbesondere des mindestens einen Reluktanz-Synchronmotors, anzupassen.

Der Begriff "Sinusfilter", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine elektrische Schaltung beziehen welche eingerichtet ist, um Signale zu entstören und dabei in sinusförmige Signale umzuwandeln. Insbesondere kann der Sinusfilter zwischen dem Frequenzumrichter und dem Reluktanz-Synchronmotor und/oder dem Hybrid-Reluktanz-Synchronmotor angeordnet sein, und das Ausgangssignal des Frequenzumrichters, insbesondere die Ausgangs-Wechselspannung, in sinusform bringen, wobei gegebenenfalls aufkommende Störsignale herausgefiltert werden.

Der Begriff "elektrisch Verbinden", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf das Zusammenschließen von mindestens zwei elektrischen Komponenten beziehen, um einen Stromfluss zwischen den Komponenten zu ermöglichen.

Der Begriff "Dämpferwicklung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen elektrisch leitfähigen Käfig, der eingerichtet ist, um potentiell in Synchronmaschinen aufkommende mechanische Pendelmomente zu dämpfen. Die Dämpferwicklung kann auch als "Dämpferkäfig" bezeichnet werden, sodass diese Begriffe synonym verwendet werden können.

Das Stromversorgungskabel kann eine Länge L aufweisen, wobei L ≥ 50 m. Insbesondere kann das Stromversorgungskabel eine Länge L ≥ 90 m aufweisen. Zum Beispiel kann das Stromversorgungskabel eine Länge L in dem Bereich 50 m ≤ L ≤ 1000 m aufweisen.

In einem weiteren Aspekt der vorliegenden Erfindung wird ein Tauchkreiselpumpensystem zur Fluidförderung vorgeschlagen. Insbesondere ist das Tauchkreiselpumpensystem eingerichtet zur Fluidförderung in der Geothermie. Alternativ oder zusätzlich kann das Tauchkreiselpumpensystem auch zur Fluidförderung in der Ölindustrie und/oder der Wasserindustrie eingerichtet sein. Das Tauchkreiselpumpensystem kann auch als Tiefbrunnen-Pumpsystem bezeichnet werden, sodass die Begriffe synonym verwendbar sind. Das Tauchkreiselpumpensystem umfasst mindestens eine Tauchkreiselpumpe und mindestens ein elektrisches Antriebssystem wie es hierin beschrieben ist, beispielsweise nach einer der oben ausgeführten Ausführungsformen oder nach einer der nachfolgend näher beschriebenen Ausführungsformen. Für Definitionen und Ausgestaltungen in Bezug auf das elektrische Antriebssystem wird daher auf obige Definitionen und Ausführungen zum elektrischen Antriebssystem verwiesen. Die Tauchkreiselpumpe und das elektrische Antriebssystem des Tauchkreiselpumpensystems sind eingerichtet, insbesondere derart angeordnet und elektrisch verbunden, um die Tauchkreiselpumpe über das elektrische Antriebssystem anzutreiben.

Der Begriff "Tauchkreiselpumpensystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Menge von interagierenden oder voneinander abhängigen Komponenten, insbesondere zumindest eine Tauchkreiselpumpe und zumindest ein Antriebssystem, beziehen, die ein Ganzes bilden und eingerichtet sind, um Fluid von unter der Erdoberfläche, beispielsweise aus der Erdkruste, zu fördern, beispielsweise also von unterhalb der Erdoberfläche nach oberhalb der Erdoberfläche zu bringen. Insbesondere können die Komponenten des Tauchkreiselpumpensystems miteinander interagieren, um mindestens eine gemeinsame Funktion, beispielsweise die Fluidförderung in der Geothermie, beispielsweise das Fördern von mindestens 4°C, insbesondere mindestens 20°C, beispielsweise mindestens 80°C, warmem Fluid aus der Erdkruste, zu erfüllen. Die mindestens zwei Komponenten, Tauchkreiselpumpe und Antriebssystem, können unabhängig voneinander gehandhabt werden und, insbesondere während des Betriebs des Tauchkreiselpumpensystems, miteinander gekoppelt oder verbindbar sein.

In einem weiteren Aspekt der vorliegenden Erfindung wird eine Verwendung mindestens eines Reluktanz-Synchronmotors oder mindestens eines Hybrid-Reluktanz-Synchronmotors in einem Tauchkreiselpumpensystem zur Fluidförderung, beispielsweise in der Geothermie, der Ölindustrie und/oder der Wasserindustrie, vorgeschlagen. Insbesondere wird die Verwendung von mindestens einem Reluktanz-Synchronmotor oder mindestens einem Hybrid-Reluktanz-Synchronmotor in einem Tauchkreiselpumpensystem zur Förderung von mindestens 80°C warmem Fluid aus der Erdkruste vorgeschlagen.

Insbesondere wird die Verwendung mindestens eines Reluktanz-Synchronmotors oder mindestens eines Hybrid-Reluktanz-Synchronmotors in dem elektrischen Antriebssystem gemäß der vorliegenden Erfindung, beispielsweise gemäß einer oder mehreren der oben beschriebenen Ausgestaltungen oder -formen und/oder gemäß einer oder mehrerer der nachfolgend noch näher beschriebenen Ausgestaltungen und/oder -formen als Teil des Tauchkreiselpumpensystems vorgeschlagen wie es hierin beschrieben ist. Für Definitionen und Ausgestaltungen in Bezug auf das elektrische Antriebssystem und auf das Tauchkreiselpumpensystem wird daher auf obige Definitionen und Ausführungen zum elektrischen Antriebssystem und zum Tauchkreiselpumpensystem verwiesen.

Beispielsweise kann das durch die Tauchkreiselpumpe förderbare und/oder geförderte Fluid eine Temperatur aufweisen in dem Bereich von 4 bis 300 °C, insbesondere von 20 bis 300 °C, insbesondere von 80 bis 300 °C, insbesondere von 100 bis 300 °C, insbesondere von 140 bis 200 °C, insbesondere von 160 bis 180 °C. Insbesondere können das zu fördernde Fluid und die Motorflüssigkeit des Reluktanz-Synchronmotors und/oder des Hbrid-Reluktanz-Synchronmotors, beispielsweise während dessen Betrieb, eine ähnliche Temperatur aufweisen, beispielsweise Temperaturen die sich um ≤ 50°C, insbesondere um ≤ 30°C, beispielsweise ≤ 20°C, unterscheiden.

Das vorgeschlagene elektrische Antriebssystem zum Antreiben mindestens einer Tauchkreiselpumpe, das vorgeschlagene Tauchkreiselpumpensystem zur Fluidförderung in der Geothermie sowie die vorgeschlagene Verwendung mindestens eines Reluktanz-Synchronmotors und/oder Hybrid-Reluktanz-Synchronmotors in einem Tauchkreiselpumpensystem zur Fluidförderung weisen gegenüber bekannten Systemen und Verwendungen der genannten Art zahlreiche Vorteile auf. Insbesondere kann beispielsweise die Lebenszeit, insbesondere die Betriebsstunden, des Reluktanz-Synchronmotors und/oder des Hybrid-Reluktanz-Synchronmotors, im Vergleich zu bekannten Motoren, wie beispielsweise Asynchronmotoren und/oder Permanentmagnet-Synchronmotoren, länger sein, wodurch Standzeiten aufgrund von Wartungsarbeiten reduziert und die Wirtschaftlichkeit erhöht werden kann.

Zusammenfassend werden, ohne Beschränkung weiterer möglicher Ausgestaltungen, folgende Ausführungsformen vorgeschlagen:
Ausführungsform 1. Elektrisches Antriebssystem zum Antreiben mindestens einer Tauchkreiselpumpe, insbesondere einer elektrischen Tauchkreiselpumpe, zur Fluidförderung, insbesondere in der Geothermie, der Ölindustrie und/oder der Wasserindustrie, wobei das elektrische Antriebssystem mindestens einen Reluktanz-Synchronmotor oder mindestens einen Hybrid-Reluktanz-Synchronmotor umfasst, wobei mindestens einer der Motoren, insbesondere mindestens einer des mindestens einen Reluktanz-Synchronmotors und des mindestens einen Hybrid-Reluktanz-Synchronmotors, eine Rotorwelle, ein Lamellen aufweisendes Rotorsegment und einen Stator umfasst, wobei das Verhältnis einer Länge der Rotorwelle zu einem Außendurchmesser des Stators ≥ 2 ist.
Ausführungsform 2. Elektrisches Antriebssystem nach der vorhergehenden Ausführungsform, wobei die Länge der Rotorwelle in dem Bereich liegt von 70 cm bis 5000 cm, insbesondere von 70 cm bis 2000 cm, insbesondere von 70 cm bis 1500 cm, insbesondere von 70 cm bis 1200 cm, insbesondere von 70 cm bis 1000 cm, insbesondere von 70 cm bis 960 cm.
Ausführungsform 3. Elektrisches Antriebssystem nach einer der vorhergehenden Ausführungsformen, wobei der Außendurchmesser des Stators in dem Bereich liegt von 0,5 cm bis 30 cm, insbesondere von 0,5 cm bis 25,00 cm, insbesondere von 5,00 cm bis 22,00 cm, insbesondere von 10,00 cm bis 20,00 cm, insbesondere von 10,16 cm bis 18,75 cm.
Ausführungsform 4. Elektrisches Antriebssystem nach einer der vorhergehenden Ausführungsformen, wobei der Reluktanz-Synchronmotor frei ist von Magneteisenstein.
Ausführungsform 5. Elektrisches Antriebssystem nach einer der vorhergehenden Ausführungsformen, wobei der Reluktanz-Synchronmotor und/oder der Hybrid-Reluktanz-Synchronmotor eingerichtet ist, um in das von der Tauchkreiselpumpe geförderte Fluid eingetaucht zu werden, wobei das Fluid eine Temperatur aufweist in dem Bereich von 4 bis 300 °C, insbesondere von 20 bis 300 °C, insbesondere von 80 bis 300 °C, insbesondere von 100 bis 300 °C, insbesondere von 140 bis 200 °C, insbesondere von 160 bis 180 °C.
Ausführungsform 6. Elektrisches Antriebssystem nach einer der vorhergehenden Ausführungsformen, wobei der Reluktanz-Synchronmotor und/oder der Hybrid-Reluktanz-Synchronmotor mindestens eine Motorflüssigkeit aufweisen die im Betrieb eine Temperatur, beispielsweise eine Betriebstemperatur, aufweist in dem Bereich von 40 bis 400 °C, insbesondere von 40 bis 350 °C, insbesondere von 80 bis 300 °C, insbesondere von 100 bis 300 °C, insbesondere von 150 bis 300 °C, insbesondere von 210 bis 230 °C.
Ausführungsform 7. Elektrisches Antriebssystem nach einer der vorhergehenden Ausführungsformen, umfassend mindestens einen weiteren Reluktanz-Synchronmotor oder mindestens einen weiteren Hybrid-Reluktanz-Synchronmotor, wobei der mindestens eine weitere Reluktanz-Synchronmotor der Hybrid-Reluktanz-Synchronmotor mit dem ersten Reluktanz-Synchronmotor oder Hybrid-Reluktanz-Synchronmotor in Reihe geschaltet ist.
Ausführungsform 8. Elektrisches Antriebssystem nach einer der vorhergehenden Ausführungsformen, weiterhin umfassend mindestens eine Komponente, beispielsweise alle Komponenten, ausgewählt aus der Gruppe bestehend aus: Gleichrichter, beispielsweise als Teil eines Frequenzumrichters; DC-Link; Wechselrichter, beispielsweise als, ggf. weiterer, Teil des Frequenzumrichters; Transformator; Sinusfilter; Steuerung und/oder Regelung, Stromversorgungskabel; Dämpferwicklung.
Ausführungsform 9. Elektrisches Antriebssystem nach der vorhergehenden Ausführungsform, wobei das Stromversorgungskabel eine Länge L aufweist, wobei L ≥ 50 m, insbesondere L ≥ 90 m, beispielsweise 50 m ≤ L ≤ 1000 m.
Ausführungsform 10. Tauchkreiselpumpensystem, insbesondere Tiefbrunnen-Pumpsystem, zur Fluidförderung, insbesondere in der Geothermie, der Ölindustrie und/oder der Wasserindustrie, umfassend mindestens eine Tauchkreiselpumpe und mindestens ein elektrisches Antriebssystem nach einer der vorhergehenden Ausführungsformen, wobei die Tauchkreiselpumpe und das elektrische Antriebssystem eingerichtet sind, um die Tauchkreiselpumpe über das elektrische Antriebssystem anzutreiben.
Ausführungsform 11. Verwendung mindestens eines Reluktanz-Synchronmotors oder eines Hybrid-Reluktanz-Synchronmotors in einem Tauchkreiselpumpensystem zur Fluidförderung, insbesondere in der Geothermie, der Ölindustrie und/oder der Wasserindustrie.
Ausführungsform 12. Verwendung nach dem vorherigen Anspruch, wobei das Tauchkreiselpumpensystem ein Tauchkreiselpumpensystem ist nach einer der vorhergehenden ein Tauchkreiselpumpensystem betreffenden Ausführungsformen.
Ausführungsform 13. Verwendung nach einer der zwei vorhergehenden Ausführungsformen, wobei das durch die Tauchkreiselpumpe förderbare und/oder geförderte Fluid eine Temperatur aufweist in dem Bereich von 4 bis 300 °C, insbesondere von 20 bis 300 °C, insbesondere von 80 bis 300 °C, insbesondere von 100 bis 300 °C, insbesondere von 140 bis 200 °C, insbesondere von 160 bis 180 °C, wobei das Fluid und die Motorflüssigkeit mindestens eines Reluktanz-Synchronmotors oder Hybrid-Reluktanz-Synchronmotors, insbesondere während dessen Betrieb, Temperaturen aufweist die sich um ≤ 50°C unterscheiden.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figuren 1 bis 3: schematische Darstellungen von verschiedenen Ausführungsformen eines Tauchkreiselpumpensystems mit verschiedenen Ausführungsformen eines elektrischen Antriebssystems; und
- Figuren 4 bis 7: schematische Darstellungen verschiedener Ausführungsformen eines Teils eines elektrischen Antriebssystems.

### Beschreibung der Ausführungsbeispiele

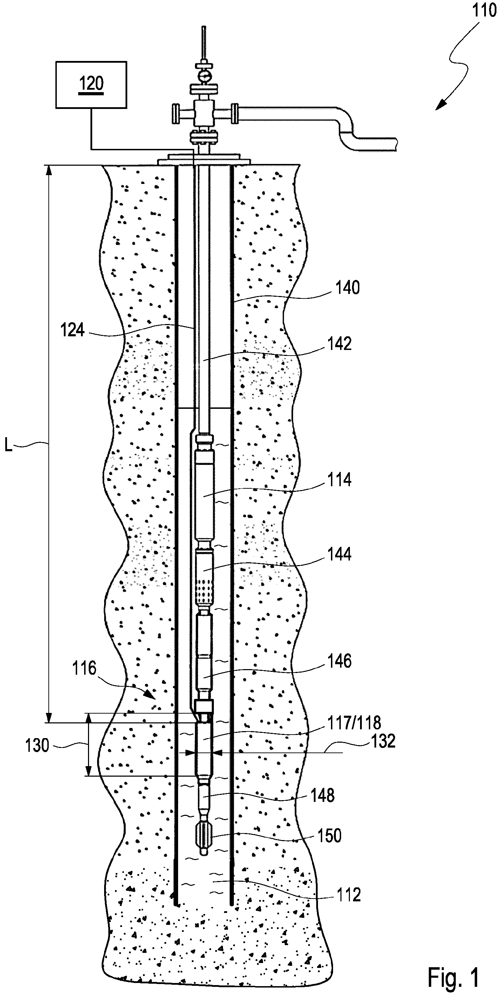

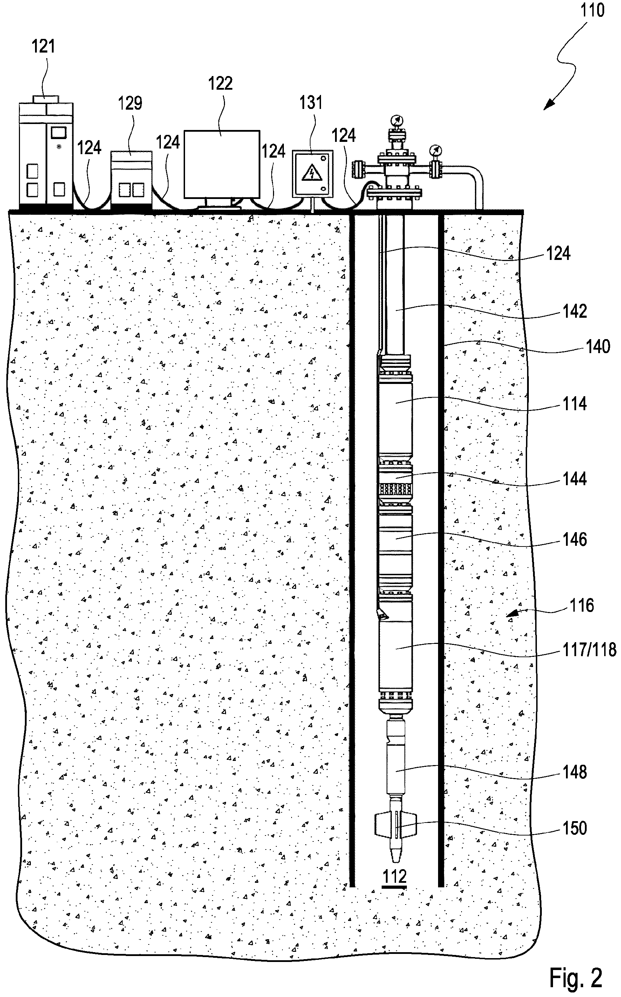

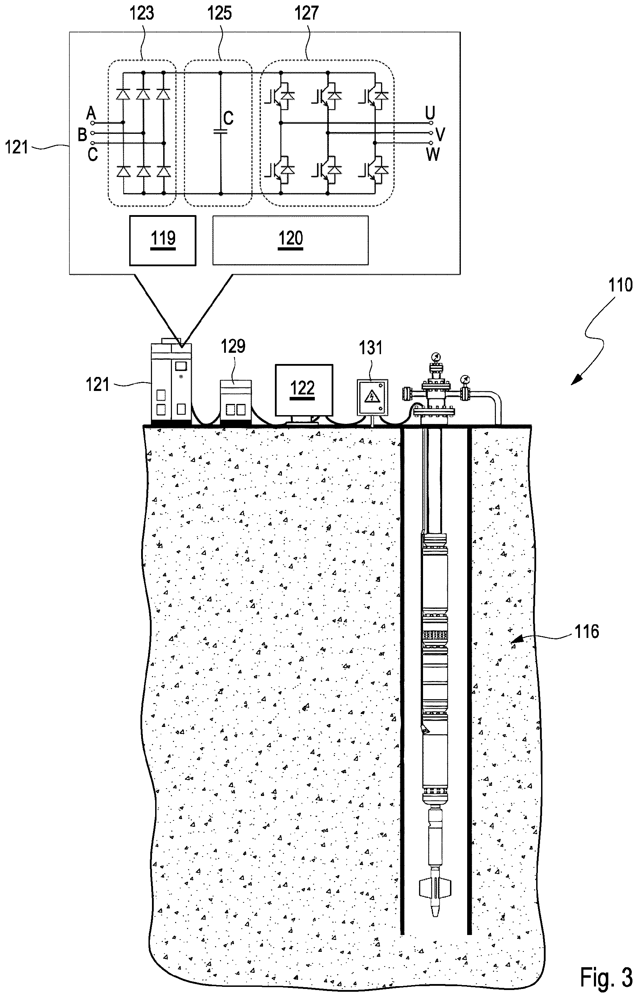

Figuren 1 bis 3 zeigen verschiedene Ausführungsformen eines Tauchkreiselpumpensystems 110. Das Tauchkreiselpumpensystem 110 ist eingerichtet zur Fluidförderung, also zur Förderung mindestens eines Fluids 112, beispielsweise in der Geothermie. Alternativ oder zusätzlich kann das Tauchkreiselpumpensystem 110 auch eingerichtet sein zur Fluidförderung, insbesondere zur Erdölförderung, in der Ölindustrie, und/oder zur Wasserförderung, insbesondere Trinkwasser-Förderung, in der Wasserindustrie. Insbesondere kann das Tauchkreiselpumpensystem 110 zur Förderung von mindestens 4 °C, beispielsweise mindestens 20 °C, vorzugsweise mindestens 80°C, warmem Fluid 112 aus der Erdkruste eingerichtet sein. Das Tauchkreiselpumpensystem 110, auch als Tiefbrunnen-Pumpsystem bezeichnet, umfasst mindestens eine Tauchkreiselpumpe 114, beispielsweise eine elektrische Tauchkreiselpumpe 114, und mindestens ein elektrisches Antriebssystem 116. Dabei ist das Tauchkreiselpumpensystem 110, also die Tauchkreiselpumpe 114 und das elektrische Antriebssystem 116, eingerichtet, um die Tauchkreiselpumpe 114 über das elektrische Antriebssystem 116 anzutreiben.

Das Tauchkreiselpumpensystem 110 kann beispielsweise neben den oben genannten Komponenten noch weitere Komponenten aufweisen. So kann insbesondere eine Bohrlochverrohrung 140 zur Stabilisierung des Bohrlochs vorhanden sein. Weiterhin kann das Tauchkreiselpumpensystem 110 einen Förderrohrstrang 142 aufweisen, durch den das Fluid 112 an die Erdoberfläche gepumpt werden kann. Auch weitere Komponenten wie ein Zulauf und Gasabscheider 144, eine Schutzeinrichtung 146, ein Bohrlochsensor 148 und eine Zentrierung 150 können Teil des Tauchkreiselpumpensystems 110 sein.

Die Figuren 1 bis 3 zeigen unterschiedliche Ausführungsformen des elektrischen Antriebssystems 116 als Teil des Tauchkreiselpumpensystems 110. Das elektrische Antriebssystem 116 ist eingerichtet zum Antreiben der mindestens einen Tauchkreiselpumpe 110. Das elektrische Antriebssystem umfasst mindestens einen Reluktanz-Synchronmotor 117 oder mindestens einen Hybrid-Reluktanz-Synchronmotor 118.

Beispielsweise kann das elektrische Antriebssystem 116 mindestens eine Steuerung 120, mindestens einen Regelung 119, beispielsweise auch als Regler bezeichnet, insbesondere als Teil eines Frequenzumrichters 121 mindestens einen Gleichrichter 123, beispielsweise als Teil des Frequenzumrichters 121, mindestens einen DC-Link 125, beispielsweise auch als Teil des Frequenzumrichters 121, mindestens einen Wechselrichter 127, beispielsweise auch als Teil des Frequenzumrichters 121, mindestens einen Transformator 122, mindestens einen Sinusfilter 129 und/oder mindestens eine Dämpferwicklung (nicht gezeigt) umfassen. Auch ein Verteilerkasten 131 kann Teil des Antriebssystems 116 sein. Insbesondere kann das elektrische Antriebssystem 116 mindestens ein Stromversorgungskabel 124 umfassen. Dabei kann das Stromversorgungskabel 124 beispielsweise eine Länge L von L ≥ 50 m aufweisen.

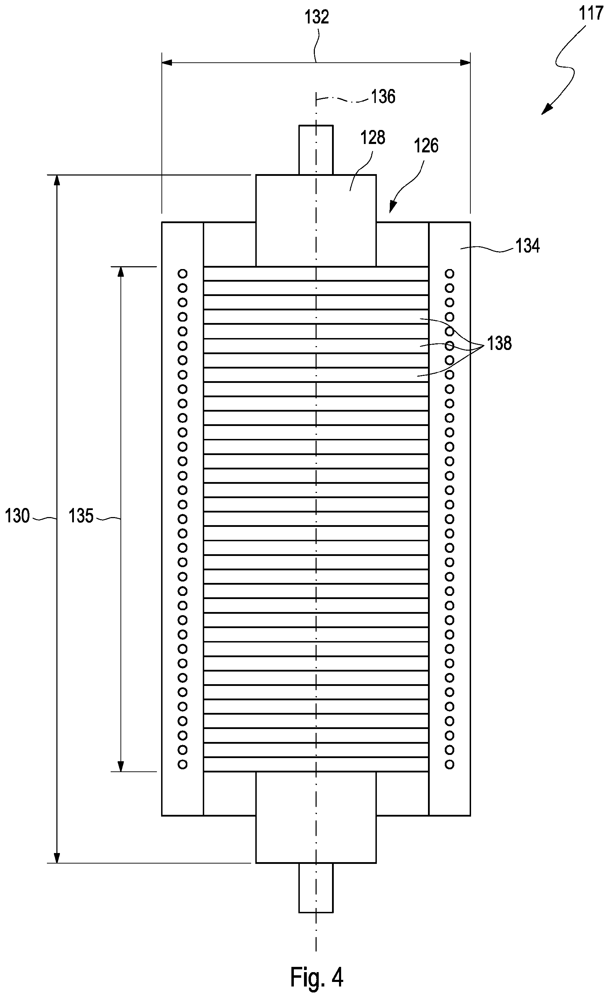

Figuren 4 bis 7 zeigen schematische Darstellungen verschiedener Ausführungsformen eines Teils eines elektrischen Antriebssystems 116, insbesondere der Motoren 117, 118 des Antriebssystems 116. Mindestens einer der Motoren 117, 118, also mindestens einer des mindestens einen Reluktanz-Synchronmotors 117 oder des mindestens einen Hybrid-Reluktanz-Synchronmotors 118 des Antriebssystems 116, weist eine Rotorwelle 128, ein Lamellen 138 aufweisendes Rotorsegment 126 und einen Stator 134 auf. Dabei ist das Verhältnis einer Länge 130 der Rotorwelle 128 zu einem Außendurchmesser 132 des Stators 134 ≥ 2. Insbesondere kann das Verhältnis ≥ 2,3 sein. Zum Beispiel kann die Rotorwelle 128 eine Länge 130 von mindestens 70 cm aufweisen und der Stator 134 einen Außendurchmesser 132 von maximal 30 cm aufweisen.

Auch ein noch größerer Unterschied zwischen der Länge der Rotorwelle 128 und dem Durchmesser 134 des Stators 132 kann existieren. So kann das Verhältnis beispielsweise auch ≥ 3 sein, und/oder sogar ≥ 5, und/oder sogar ≥ 60.

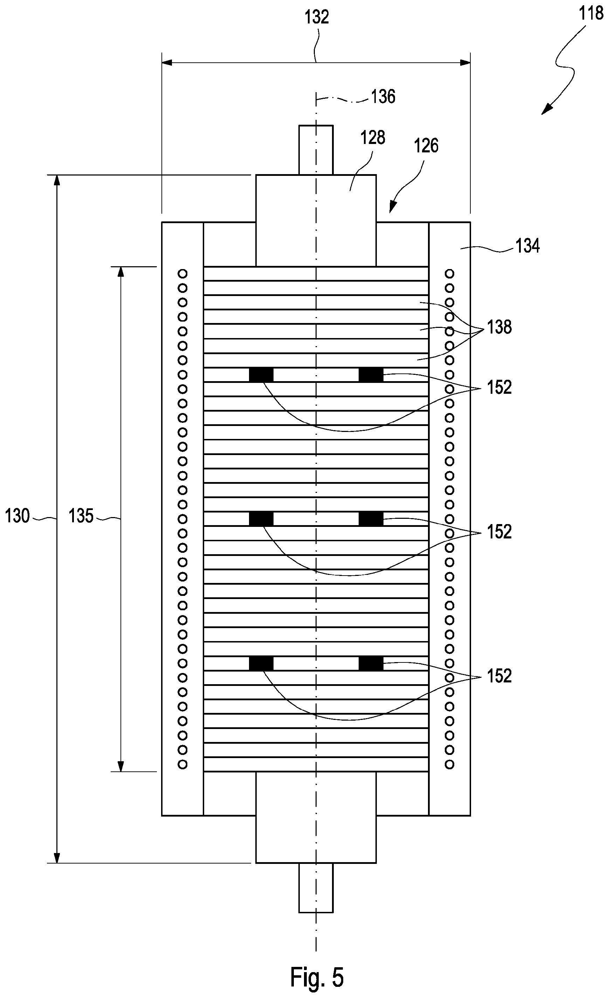

Insbesondere zeigt Figur 4 eine schematische Darstellung eines Reluktanz-Synchronmotors 117, während in Figur 5 eine schematische Darstellung eines Hybrid-Reluktanz-Synchronmotors 118 gezeigt ist. Der Hybrid-Reluktanz-Synchronmotor 118 umfasst dabei mindestens einen, beispielsweise mehrere, Permanentmagneten 152. Im Gegensatz zum Hybrid-Reluktanz-Synchronmotor 118, kann der Reluktanz-Synchronmotor 117 beispielsweise frei von Magneteisenstein sein.

Beispielsweise kann das elektrische Antriebssystem 116 auch mehrere Reluktanz-Synchronmotoren 117 und/oder mehrere Hybrid-Reluktanz-Synchronmotoren 118 umfassen, also mindestens einen weiteren von Reluktanz-Synchronmotor 117 und Hybrid-Reluktanz-Synchronmotor 118 aufweisen. Die mindestens zwei Reluktanz-Synchronmotoren 117 oder die mindestens zwei Hybrid-Reluktanz-Synchronmotoren 118 können dabei insbesondere in Reihe geschaltet sein, also hintereinander entlang der gemeinsamen Rotationsachse 136 angeordnet sein. Auf diese Weise kann der Elektrotauchmotor 118 beispielsweise eine Länge von 30 m aufweisen bei gleichzeitig sehr schmalem Durchmesser, insbesondere dem Außendurchmesser des Stators 132 entsprechen, von maximal 30 cm.

Insbesondere kann die Länge 130 der Rotorwelle 128 eines elektrischen Antriebssystems 116 mit genau einem Reluktanz-Synchronmotor 117 oder Hybrid-Reluktanz-Synchronmotor 118 der Länge des Rotorsegments 126 entsprechen, beispielsweise mit einer Abweichung von bis zu 20%. Bei einem elektrischen Antriebssystem 116 mit mehreren, in Reihe geschalteten Motoren 117 und/oder 118, kann ein entlang einer Rotationsachse 136 gestapelte Stapel aus Rotorlamellen 138, beispielsweise eine Gesamtlänge 135 der entlang der Rotationsachse 136 hintereinander angeordneten Rotorsegmente 126 der mehreren Motoren 117 und/oder 118, zumindest 80% der Länge 130 der Rotorwelle 128 entsprechen. Insbesondere kann die Länge 135 der hintereinander entlang der Rotationsachse 136 gestapelten Rotorlamellen 138, also der Stapel aus Rotorlamellen 138 der in Reihe geschalteten Motoren 117 und/oder 118, ≥ 85% der Länge 130 der Rotorwelle 128 sein. Beispielsweise kann das Rotorsegment 126 eines einzelnen Motors 117 und/oder 118, also eines einzelnen Reluktanz-Synchronmotors 117 oder eines einzelnen Hybrid-Reluktanz-Synchronmotors 118, mehrere zueinander beabstandet, insbesondere entlang der Rotationsachse 136 zueinander beabstandet, angeordnete Stapel aus Lamellen 138 aufweisen.

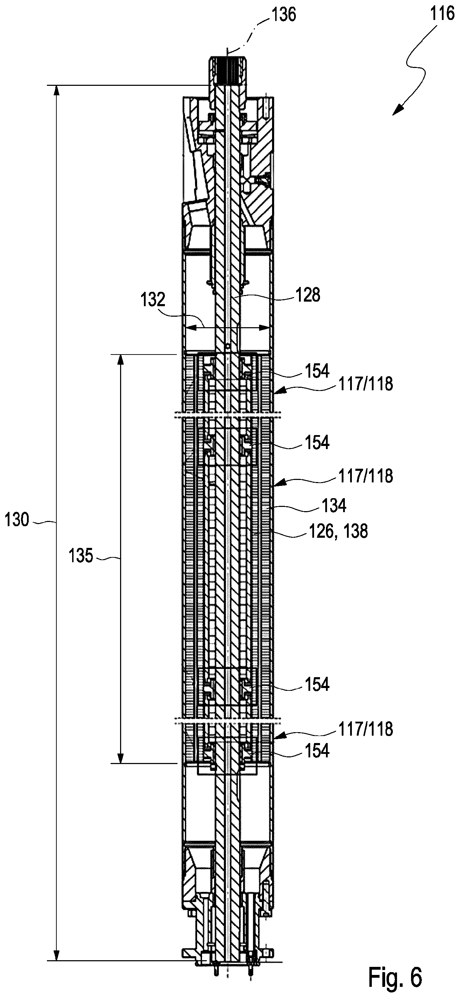

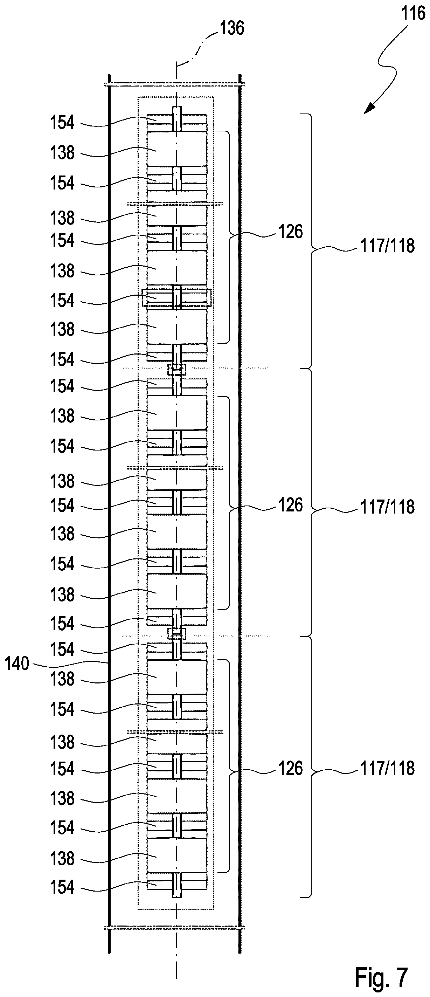

Insbesondere zeigen die Figuren 6 und 7 unterschiedliche Ausführungsformen eines mehrere in Reihe geschaltete Motoren 117 und/oder 118 umfassenden elektrischen Antriebssystems 116. Insbesondere können die in Reihe geschaltete Motoren 117 und/oder 118 durch Radiallager 154 gelagert sein.

### Bezugszeichenliste

- 110: Tauchkreiselpumpensystem
- 112: Fluid
- 114: Tauchkreiselpumpe
- 116: elektrisches Antriebssystem
- 117: Reluktanz-Synchronmotor
- 118: Hybrid-Reluktanz-Synchronmotor
- 119: Regelung
- 120: Steuerung
- 121: Frequenzumrichter
- 122: Transformator
- 123: Gleichrichter
- 124: Stromversorgungskabel
- 125: DC-Link
- 126: Rotorsegment
- 127: Wechselrichter
- 128: Rotorwelle
- 129: Sinusfilter
- 130: Länge der Rotorwelle
- 131: Verteilerkasten
- 132: Außendurchmesser des Stators
- 134: Stator
- 135: Länge des Rotorsegments
- 136: Rotationsachse
- 138: Rotorlamellen
- 140: Bohrlochverrohrung
- 142: Förderrohrstrang
- 144: Zulauf und Gasabscheider
- 146: Schutzeinrichtung
- 148: Bohrlochsensor
- 150: Zentrierung
- 152: Permanentmagnet

## Patentansprüche

1. Elektrisches Antriebssystem (116) zum Antreiben mindestens einer Tauchkreiselpumpe (114), wobei das elektrische Antriebssystem (116) mindestens einen Reluktanz-Synchronmotor (117) oder mindestens einen Hybrid-Reluktanz-Synchronmotor (118) umfasst, wobei mindestens einer der Motoren (117, 118) eine Rotorwelle (128), ein Lamellen (138) aufweisendes Rotorsegment (126) und einen Stator (134) umfasst, wobei das Verhältnis einer Länge (130) der Rotorwelle (128) zu einem Außendurchmesser (132) des Stators (134) ≥ 2 ist.

2. Elektrisches Antriebssystem (116) nach dem vorhergehenden Anspruch, wobei die Länge (130) der Rotorwelle (128) in dem Bereich liegt von 70 cm bis 5000 cm.

3. Elektrisches Antriebssystem (116) nach einem der vorhergehenden Ansprüche, wobei der Außendurchmesser (132) des Stators (134) in dem Bereich liegt von 0,5 cm bis 30 cm.

4. Elektrisches Antriebssystem (116) nach einem der vorhergehenden Ansprüche, wobei der Reluktanz-Synchronmotor (117) frei ist von Magneteisenstein.

5. Elektrisches Antriebssystem (116) nach einem der vorhergehenden Ansprüche, wobei der Reluktanz-Synchronmotor und/oder der Hybrid-Reluktanz-Synchronmotor eingerichtet ist, um in ein von der Tauchkreiselpumpe förderbares und/oder gefördertes Fluid eingetaucht zu werden, wobei das Fluid eine Temperatur aufweist in dem Bereich von 4 bis 300 °C.

6. Elektrisches Antriebssystem (116) nach einem der vorhergehenden Ansprüche, wobei der Reluktanz-Synchronmotor und/oder der Hybrid-Reluktanz-Synchronmotor mindestens eine Motorflüssigkeit aufweisen die im Betrieb eine Temperatur aufweist in dem Bereich von 40 bis 400 °C.

7. Elektrisches Antriebssystem (116) nach einem der vorhergehenden Ansprüche, umfassend mindestens einen weiteren Reluktanz-Synchronmotor (117) und/oder mindestens einen weiteren Hybrid-Reluktanz-Synchronmotor (118), wobei der mindestens eine weitere Reluktanz-Synchronmotor (117) oder Hybrid-Reluktanz-Synchronmotor (118) mit dem ersten Reluktanz-Synchronmotor (117) oder Hybrid-Reluktanz-Synchronmotor (118) in Reihe geschaltet ist.

8. Elektrisches Antriebssystem (116) nach einem der vorhergehenden Ansprüche, weiterhin umfassend mindestens eine Komponente ausgewählt aus der Gruppe bestehend aus: Gleichrichter (123); DC-Link (125); Wechselrichter (127); Transformator (122); Sinusfilter (129); Steuerung (120) und/oder Regelung (119); Stromversorgungskabel (124); Dämpferwicklung.

9. Elektrisches Antriebssystem (116) nach dem vorhergehenden Anspruch, wobei das Stromversorgungskabel (124) eine Länge L aufweist, wobei L ≥ 50 m.

10. Tauchkreiselpumpensystem (110) zur Fluidförderung umfassend mindestens eine Tauchkreiselpumpe (114) und mindestens ein elektrisches Antriebssystem (116) nach einem der vorhergehenden Ansprüche, wobei die Tauchkreiselpumpe (114) und das elektrische Antriebssystem (116) eingerichtet sind, um die Tauchkreiselpumpe (114) über das elektrische Antriebssystem (116) anzutreiben.

11. Verwendung mindestens eines Reluktanz-Synchronmotors (117) oder eines Hybrid-Reluktanz-Synchronmotors (118) in einem Tauchkreiselpumpensystem (110) zur Fluidförderung.

12. Verwendung nach dem vorherigen Anspruch, wobei das Tauchkreiselpumpensystem (110) ein Tauchkreiselpumpensystem (110) ist nach einem der vorhergehenden ein Tauchkreiselpumpensystem (110) betreffenden Ansprüche.

13. Verwendung nach einem der zwei vorhergehenden Ansprüche, wobei das durch die Tauchkreiselpumpe (114) förderbare und/oder geförderte Fluid eine Temperatur aufweist in dem Bereich von 4 bis 300 °C, wobei das Fluid und die Motorflüssigkeit mindestens eines Reluktanz-Synchronmotors (117) oder Hybrid-Reluktanzchronmotors (118) Temperaturen aufweist die sich um ≤ 50°C unterscheiden.
